# EUROPEAN PATENT SPECIFICATION

(11) **EP 2 676 946 B1**
(45) Date of publication and mention of the grant of the patent: **07.11.2018**
(21) Application number: 12739019.3
(22) Date of filing: 26.01.2012
(51) Int. Cl.: C04B 35/565

(54) **TI3SIC2 MATERIAL, ELECTRODE, SPARK PLUG, AND PROCESSES FOR PRODUCTION THEREOF**
TI3SIC2-MATERIAL, ELEKTRODE, ZÜNDKERZE UND VERFAHREN ZU IHRER HERSTELLUNG
MATÉRIAU TI3SIC2, ÉLECTRODE, BOUGIE D'ALLUMAGE, ET PROCÉDÉS DE PRODUCTION ASSOCIÉS

(30) Priority: 26.01.2011 US 201161436262 P
(43) Date of publication of application: 25.12.2013
(73) Proprietor: NGK Insulators, Ltd., Nagoya-shi, Aichi 467-8530 (JP)
(72) Inventor: HATTORI, Tetsuya, Nagoya-shi Aichi 467-8530 (JP); KIMATA, Takafumi, Nagoya-shi Aichi 467-8530 (JP); KOBAYASHI, Yoshimasa, Nagoya-shi Aichi 467-8530 (JP)
(74) Representative: Naylor, Matthew John
(86) International application number: PCT/JP2012/051703
(87) International publication number: WO 2012/102348

(56) References cited:
- WO-A1-97/18162
- WO-A1-2007/093011
- CN-A- 1 552 662
- JP-A- 2003 020 279
- JP-A- 2004 107 152
- JP-A- 2005 089 252
- JP-A- 2011 088 804
- US-A1- 2010 052 498
- US-A1- 2010 052 498
- ORRU R ET AL: "Consolidation/synthesis of materials by electric current activated/assisted sintering", MATERIALS SCIENCE AND ENGINEERING R: REPORTS, ELSEVIER SEQUOIA S.A., LAUSANNE, CH, vol. 63, no. 4-6, 12 February 2009 (2009-02-12), pages 127-287, XP025914673, ISSN: 0927-796X, DOI: 10.1016/J.MSER.2008.09.003 [retrieved on 2009-01-08]
- ARUNAJATESAN S ET AL: "SYNTHESIS OF TITANIUM SILICON CARBIDE", JOURNAL OF THE AMERICAN CERAMIC SOCIETY, BLACKWELL PUBLISHING, MALDEN, MA, US, vol. 78, no. 3, 1 March 1995 (1995-03-01), pages 667-672, XP001147116, ISSN: 0002-7820, DOI: 10.1111/J.1151-2916.1995.TB08230.X
- LIANG B Y ET AL: "Effect of alloying time on fabrication of Ti3Si(Al)C2 by spark plasma sintering", ADVANCES IN APPLIED CERAMICS: STRUCTURAL, FUNCTIONAL ANDBIOCERAMICS, MANEY PUBLISHING, GB, vol. 108, no. 3, 1 April 2009 (2009-04-01) , pages 162-166, XP008171338, ISSN: 1743-6753, DOI: 10.1179/174367608X324063
- B.Y.LIANG: 'Effect of alloying time on fabrication of Ti3Si(Al)C2 by spark plasma sintering' ADVANCES IN APPLIED CERAMICS vol. 108, no. 3, 01 April 2009, pages 162 - 166, XP008171338

## Description

### Technical Field

The present invention relates to a Ti₃SiC₂ based material being superior in spark wear resistance and oxidation resistance, an electrode, a spark plug, and method for manufacturing thereof.

### Background Art

Traditionally, Ni alloy, Pt alloy and Ir alloy have been used as electrode materials for spark plug (Patent Document 1). Although Ni alloy has an advantage of inexpensive, Ni alloy is inferior in spark wear resistance and so it is needed to replace a spark plug frequently. On the other hand, Pt alloy and Ir alloy have an advantage of being a long lifetime because they are superior in oxidation resistance and spark wear resistance, but they are noble metal alloy and so have a drawback of high cost. Although, for reducing the cost, it has been proposed an electrode of which only the tip end is made of a Pt or Ir alloy by welding a Pt or Ir alloy chip at the tip end of a Ni alloy, there has a problem of peeling the chip off due to a difference in coefficient of linear expansion (Patent Document 2). For this reason, there have been no electrode materials for spark plug being inexpensive and having a sufficient lifetime.

Moreover, since it has been proceed in severe exposed environment of plug electrode along with a recent engine fuel efficiency, high-performance, and the like, there has been a growing need for an electrode material being further superior in resistance (such as oxidation resistance and spark wear resistance). As an alternative to an alloy, there has been proposed a Ti₃SiC₂ being superior in spark wear resistance, oxidation resistance, and heat resistance, and being lower in cost than an alloy material (Patent Document 3).

Ti₃SiC₂ has a combination of high thermal and electrical conductivity, thermal shock resistance and easily workability being properties of metal, and of excellent heat resistance and oxidation resistance being properties of ceramics, and so is a promising electrode material for spark plug. However, it is difficult to synthesize single-phase Ti₃SiC₂, and TiC and SiC are present therein as heterophases. It is also difficult to perform sufficiently densification by sintering under normal pressure, and so several percent of open porosity tend to remain (see Patent Documents 4 to 6).

Orru et al (2009) ["Consolidation/synthesis of materials by electric current activated/assisted sintering", MATERIALS SCIENCE AND ENGINEERING R: REPORTS, ELSEVIER SEQUOIA S.A., LAUSANNE, CH, vol. 63, no. 4-6, (2009-02-12), pages 127 - 287] provides a review of electric current assisted sintering and a discussion of hot pressing. Formation of carbide materials such as Ti₃SiC₂ is disclosed.

WO2007/093011 discloses a Ti₃SiC₂ material. WO 97/18162 suggests the formation of Ti₃SiC₂ with some Si substituted in solid solution with Al.

Arunajatesan and Carim (1995) ["SYNTHESIS OF TITANIUM SILICON CARBIDE", JOURNAL OF THE AMERICAN CERAMIC SOCIETY, BLACKWELL PUBLISHING, MALDEN, MA, US, (1995-03-01), vol. 78, no. 3, pages 667 - 672] discloses the manufacture of Ti₃SiC₂ by arc-melting an annealing from elemental precursor powders.

US 2010/0052498 discloses the manufacture of a spark plug.

CN-A-1552662 discloses the addition of up to 20 mol% Al to Ti₃SiC₂.

### Prior Art Documents

### Patent Documents

[Patent Document 1] JP-A-2002-235139
[Patent Document 2] JP-B-3562532
[Patent Document 3] US2010/0052498 A1
[Patent Document 4] JP-B-4362582
[Patent Document 5] JP-B-3951643
[Patent Document 6] JP-A-2005-89252

### Summary of the Invention

Ti₃SiC₂ itself is superior in spark wear resistance, oxidation resistance and heat resistance, but does not necessarily exhibit sufficient arc resistance (spark wear resistance and oxidation resistance) for use as an electrode material, particularly as an electrode material for spark plug.

An object of the present invention is to provide a Ti₃SiC₂ based electrode material for a spark plug, the material being superior in arc resistance, an electrode, a spark plug, and a method for manufacturing thereof.

In order to achieve the object, the present inventors found a dense Ti₃SiC₂ sintered body in which TiC phase hardly remains therein. When TiC phase or pores remain, they predominantly cause oxidation or spark wear to lower the lifetime of an electrode material. Thus, for the usage as an electrode material, particularly as an electrode material for spark plug, it is needed a dense Ti₃SiC₂ sintered body in which TiC phase hardly remains therein. The present invention provides the following Ti₃SiC₂ based material, electrode, spark plug, and method for manufacturing thereof.
[1] A Ti₃SiC₂ based electrode material for a spark plug as set out in claim 1.
[2] The Ti₃SiC₂ based material according to [1], wherein 0 to 30 mol% of Si in the main phase Ti₃SiC₂ is substituted with Al.
[3] The Ti₃SiC₂ based material according to [1] or [2], wherein a Ti₅Si₃ content is 8 mass% or less.
[4] The Ti₃SiC₂ based material according to any one of [1] to [3], wherein a SiC content is 5 mass% or less.
[5] The Ti₃SiC₂ based material according to any one of [1] to [4], wherein a thermal conductivity is 25 W/mK or more.
[6] The Ti₃SiC₂ based material according to any one of [1] to [5], wherein a bending strength is 200 MPa or more.
[7] The Ti₃SiC₂ based material according to any one of [1] to [6], wherein a coefficient of thermal expansion is 7 to 9 ppm/K.
[8] The Ti₃SiC₂ based material according to any one of [1] to [7], wherein a volume resistivity is 1×10⁻⁴ Ω·cm or less.
[9] The Ti₃SiC₂ based material according to any one of [1] to [8], wherein an oxide film formed when being held at 1,000°C for 5 hours under atmospheric pressure has a thickness of 40 µm or less.
[10] An electrode with a use of the Ti₃SiC₂ based material according to any one of [1] to [9].
[11] A spark plug formed by using the electrode according to [10].
[12] A method as set out in claim 12.
[13] A method as set out in claim 13.
[14] The method for manufacturing a Ti₃SiC₂ based material according to [12] or [13], wherein a first firing is performed at 600 to 1,400 °C for 0.5 to 20 hours under vacuum or an Ar atmosphere after subjecting thus obtained raw material powder mixture to forming, followed by a second firing is performed for 0.5 to 20 hours at 1,000 to 1,750 °C being higher than the first firing.
[15] The method for manufacturing a Ti₃SiC₂ based material according to any one of [12] to [14], wherein the first firing and the second firing are firing by hot pressing at a pressing pressure of 50 to 450 kg/cm².
[16] A method for manufacturing a spark plug as set out in claim 14.

The Ti₃SiC₂ of the present invention has improved arc resistance (spark wear resistance and oxidation resistance) because heterophase TiC and open porosity are significantly reduced. Moreover, the arc resistance is further improved by solid solution of Al. This will enable the Ti₃SiC₂ to be an electrode material for spark plug being at low cost and having significantly improved arc resistance. The present invention is defined in claim 1.

### Brief Description of the Drawing

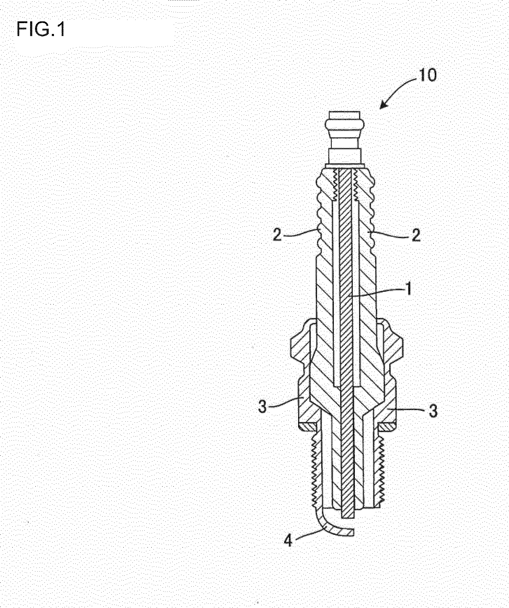

Fig. 1 is a schematic cross-sectional view showing a spark plug.

### Embodiment for Carrying out the Invention

Hereinafter, embodiments of the present invention are described with reference to the drawing. The present invention is not limited to the following embodiments, and may add modifications, alterations and improvements thereto without departing from the scope of the present invention.

A Ti₃SiC₂ based material of the present invention includes Ti₃SiC₂ as a main phase, and the TiC content thereof is 0.5 mass% or less and the open porosity thereof is 0.5% or less. Note that the main phase means a phase having 60 mass% or more.

Although Ti₃SiC₂ itself is superior in spark wear resistance, oxidation resistance and heat resistance, TiC phase or pores, if presented, predominately cause oxidation or spark wear to lower the lifetime as an electrode material. The Ti₃SiC₂ based material of the present invention is a dense Ti₃SiC₂ sintered body in which TiC phase hardly remains therein.

It is possible to synthesize a Ti₃SiC₂ based material having the TiC content of 0.5 mass% or less and the open porosity of 0.5% or less by mixing a titanium source, a silicon source, an aluminum source and a carbon source in a mixing ratio described later, and then firing at a predetermined firing temperature. Moreover, the Ti₃SiC₂ based material may be used as an electrode material, particularly as an electrode material for spark plug. This material has a good arc resistance (spark wear resistance and oxidation resistance).

It is also preferable for the Ti₃SiC₂ based material of the present invention that 0 to 30 mol% of Si in the main phase Ti₃SiC₂ is substituted with Al. That is, it may preferably be Ti₃Si₍₁₋ₓ₎AlₓC₂ (x=0 to 0.3). Substitution with Al is preferably 0 to 20 mol%, and more preferably 0 to 10 mol%. It is possible to improve the arc resistance by substituting Si portion in Ti₃SiC₂ with Al.

It is preferable for the Ti₃SiC₂ based material of the present invention that the Ti₅Si₃ content is 8 mass% or less. It is more preferably 7 mass% or less, and further preferably 6 mass% or less. When the Ti₅Si₃ content is 8 mass% or less, it is possible to improve the arc resistance.

It is preferable for the Ti₃SiC₂ based material of the present invention that the SiC content is 5 mass% or less. It is more preferably 4.5 mass% or less, and further preferably 4 mass% or less. When the SiC content is 5 mass% or less, it is possible to improve the arc resistance.

For the Ti₃SiC₂ based material of the present invention the TiSi₂ content is 3 mass% or less. It is more preferably 0 mass%. When the TiSi₂ content is 3 mass% or less, it is possible to improve the arc resistance.

It is preferable for the Ti₃SiC₂ based material of the present invention that the thermal conductivity is 25 W/mK or more. It is more preferably 30 W/mK or more. When the thermal conductivity is 25 W/mK or more, it exhibits a good heat dissipation as against the temperature increases due to ignition of fuel at the time of using it as a spark plug to suppress the oxidation consumption.

It is preferable for the Ti₃SiC₂ based material of the present invention that the bending strength is 200 MPa or more. It is more preferably 250 MPa or more, and further preferably 270 MPa or more. When the bending strength is 200 MPa or more, it is possible to use it as a material for a member being required strength.

It is preferable for the Ti₃SiC₂ based material of the present invention that a coefficient of thermal expansion is 7 to 9 ppm/K. It is more preferably 8 to 9 ppm/K. When the coefficient of thermal expansion is 7 to 9 ppm/K, it is possible to use it as a material for a member to be used under high temperature.

It is preferable for the Ti₃SiC₂ based material of the present invention that the volume resistivity is 1×10⁻⁴ Ω·cm or less. It is more preferably 5×10⁻⁵ Ω·cm or less, and further preferably 3×10⁻⁵ Ω·cm or less. When the volume resistivity is 1×10⁻⁴ Ω·cm or less, an energy loss is low to suitably utilize it as a spark plug.

It is preferable for the Ti₃SiC₂ based material of the present invention that an oxide film formed when being held at 1,000 °C for 5 hours under atmospheric pressure has a thickness of 40 µm or less. It is more preferably 35 µm or less, and further preferably 30 µm or less. When the thickness of oxide film formed is 40 µm or less, it is hardly oxidized to use it as a conductive material to be used under high temperature.

The Ti₃SiC₂ based material of the present invention can be used as an electrode material. Specifically, an electrode for spark plug can be formed by using the Ti₃SiC₂ based material. Fig. 1 shows a spark plug 10 of the present invention. The spark plug 10 is used for ignition in a combustion apparatus such as an engine, and includes a center electrode 1, a ground electrode 4 and the like. It is possible to produce the center electrode 1 and the ground electrode 4 with the Ti₃SiC₂ based material. Thus the present invention is an electrode formed with the use of the Ti₃SiC₂ based material, and the spark plug 10 formed by using the electrode.

As shown in Fig. 1, the spark plug 10 includes the center electrode 1, an insulator 2 disposed to surround the center electrode 1, a tubular metal shell (housing) 3 holding the insulator, and the ground electrode 4 bonded to the metal shell 3. The center electrode 1 and the ground electrode 4 are opposed to each other so as to define a spark discharge gap.

The insulator 2 has an axial hole penetrating therethrough in the axial direction, and holds the center electrode 1 within the axial hole. The metal shell 3 radially surrounds the insulator 2 to hold the insulator 2. Moreover, the metal shell 3 is the one to fix the spark plug 10 at an internal combustion engine. The ground electrode 4 is bonded to the metal shell 3 at one end, and faces to the tip end of the center electrode 1 at another end.

Next, a method for manufacturing the Ti₃SiC₂ based material of the present invention is described. In the present invention, it is possible to obtain Ti₃(Si,Al)C₂ having a low TiC content by mixing a titanium source, a silicon source, an aluminum source and a carbon source at a mixing ratio described later, and then firing it at a predetermined firing temperature. In order to obtain a material closer to single-phase, it may adjust the supplied amounts of the silicon source, the aluminum source, and the carbon source, which are easily deviated from the supplied composition. When it is mixed for a short time (several to several tens of minutes) using a mortar or the like, it is preferable that the amount of the silicon source is adjusted (mixing it more as far as about 1.2 times molar with respect to the desired composition). When it is mixed for a long time (several hours) using a pot or the like, it is preferable that the carbon source (mixing it more as far as about 1.1 times molar with respect to the desired composition) as well as the silicon source are adjusted since the raw materials are easily oxidized. Moreover, since the melting point of metallic aluminum is low, it may turn into vapor to vaporize during synthesis, and thereby it easily causes deviation from the desired composition. Therefore, when the firing schedule including the temperature rising at the temperature range of 600 to 1,400°C over 0.5 to 20 hours is performed, the vaporization of unreacted Al is suppressed to enable the producing of dense Ti₃(Si, Al)C₂ substantially not deviating from the composition.

The method for manufacturing the Ti₃SiC₂ based material of the present invention includes mixing raw materials in the mass ratio of a titanium source of 68.0 to 73.5 mass%, a silicon source of 14.0 to 19.0 mass%, and a carbon source of 11.0 to 14.0 mass%, subjecting thus obtained raw material powder mixture to forming, and firing the resultant formed body. Note that the term mass ratio refers to the ratio of the element (Ti, Si, Al or C) contained in the raw materials. For example, when using silicon carbide powder as the silicon source, "the silicon source of 14.0 mass%" means that the mass ratio of Si contained in the silicon carbide powder with respect to the total raw materials is 14.0 mass%. It is preferable that the firing is performed at two stages each at a different temperature after subjecting thus obtained raw material powder mixture to forming. Specifically, it is preferable that first firing is performed at 600 to 1,400 °C for 0.5 to 20 hours under vacuum or an Ar atmosphere, followed by second firing is performed for 0.5 to 20 hours at 1,000 to 1,750 °C being higher than the first firing. Note that, following the first firing, the temperature is raised to the second firing temperature without lowering the temperature. Moreover, the firing time for the first firing as well as the second firing is more preferably 0.5 to 10 hours, and further preferably 0.5 to 5 hours.

As a titanium source, metallic titanium powder, TiH₂ or the like may be used. As a silicon source, metallic silicon powder or the like may be used. As a carbon source, carbon powder or the like may be used. A phenol resin or the like which is pyrolyzed into carbon may also be used as a carbon source. As an aluminum source, metallic aluminum powder may be used. Moreover, a compound formed by chemical bonding, such as, for example, silicon carbide powder, also may be used. In this way, as starting raw materials, it can be used a metallic titanium powder, silicon carbide powder and carbon powder being relatively inexpensive raw materials.

When mixing the raw materials, the silicon source may be mixed more as far as about 1.2 times molar with respect to the desired composition. Moreover, the carbon source may be mixed more as far as about 1.1 times molar with respect to the desired composition. When the mixing ratio of the raw materials and the temperatures and time of the first firing as well as the second firing are set within the above ranges, it can manufacture a Ti₃SiC₂ based material being less heterophase.

A method for manufacturing the Ti₃SiC₂ based material of the present invention at the case of substituting 0 to 30 mol% of Si in the main phase Ti₃SiC₂ with Al, includes mixing raw materials in the mass ratio of a titanium source of 68.0 to 73.5 mass%, a silicon source of 9.0 to 19.0 mass%, an aluminum source of 0 to 5.0 mass%, and a carbon source of 11.0 to 14.0 mass%, subjecting thus obtained raw material powder mixture to forming, and firing the resultant formed body. It is preferable that the firing is performed at two stages each at a different temperature after subjecting thus obtained raw material powder mixture to forming. Specifically, it is preferable that first firing is performed at 600 to 1,400 °C for 0.5 to 20 hours under vacuum or an Ar atmosphere, followed by second firing is performed for 0.5 to 20 hours at 1,000 to 1,750 °C being higher than the first firing. Note that, following the first firing, the temperature is raised to the second firing temperature without lowering the temperature. Moreover, the firing time for the first firing as well as the second firing is more preferably 0.5 to 10 hours, and further preferably 0.5 to 5 hours.

In the case that a part of Si is substituted with Al, the silicon source may be mixed more as far as about 1.2 times molar with respect to the desired composition at the time of mixing the raw materials. Moreover, the aluminum source may be mixed more as far as about 1.1 times molar with respect to the desired composition. Furthermore, the carbon source may be mixed more as far as about 1.1 times molar with respect to the desired composition. When the mixing ratio of the raw materials and the temperatures and time of the first firing as well as the second firing are set within the above ranges, it can manufacture a Ti₃SiC₂ based material being less heterophase.

The first firing and the second firing may be performed by hot pressing regardless of whether or not Si is partially substituted with Al. A pressure thereof is preferably at 50 to 450 kg/cm². It is more preferably at 100 to 350 kg/cm², and further preferably at 200 to 250 kg/cm². When the firing is preformed by the hot pressing at the pressure within this range, it can suppress deviation of composition to manufacture a Ti₃SiC₂ based material being less heterophase.

Next, a method for manufacturing the spark plug 10 is described. Firstly the center electrode 1 or the ground electrode 4 of the spark plug 10 may be formed by subjecting to cut process for the Ti₃SiC₂ based material of the present invention.

Next, the insulator 2 is produced. For example, raw material powder containing alumina, a binder and the like is press-formed to obtain a tubular formed body. The formed body is ground to obtain an insulator formed body. The electrode (center electrode 1) is embedded into the insulator formed body, followed by firing thereof to make the insulator formed body the insulator 2 and concurrently to bond the electrode and the insulator 2. Since the firing of the insulator formed body and the bonding of the insulator and the electrode can be performed in one process, the manufacturing cost can be reduced.

Meanwhile, the metal shell 3 is formed with a tubular metal material, and the ground electrode 4 is bonded to the metal shell 3. The ceramic insulator 2 provided with the center electrode 1 and the like is then fixed to the metal shell 3 provided with the ground electrode 4, whereby the spark plug 10 can be obtained.

### [Examples]

Hereinafter, the present invention is further described by way of examples, but the present invention is not limited to the following examples.

### <Mixing>

### (Examples 1 and 3 to 12 and Comparative Examples 1 to 4)

Metallic titanium powder was used as a titanium source. Silicon carbide powder was used as a silicon source. The silicon carbide powder and carbon powder (the amount deficient by the silicon carbide powder) were used as a carbon source. Metallic aluminum powder was used as an aluminum source. These raw materials were mixed in the mixing ratio (mass%) described in Table 1. Ratios of the elements contained in the raw materials are described as element ratios. They were mixed in a mortar with a pestle for 10 minutes. About 20 g of the mixed powder was weighed, and was press-formed to be 35 mm in diameter and 10 mm in thickness.

### (Example 2)

The same raw materials as those in Example 1 were mixed in the mixing ratio (mass%) described in Table 1. The raw materials were mixed in a different way. Specifically, nylon cobbled stone (including an iron core therein) were put in a pot, and the pot mill mixing is performed for 4 hours using IPA as solvent. The mixed powder was then dried using an evaporator, and was sieved through #30 mesh. About 20 g of the mixed powder was weighed, and was press-formed to be 35 mm in diameter and a 10 mm in thickness.

### <Firing>

### (Examples 1 to 8 and Comparative Examples 1 to 3)

The formed body obtained by the press forming was hot-pressed at 1,600 °C for 4 hours under an Ar atmosphere and at the pressure of 210 kg/cm² to obtain a sintered body (sample).

### (Examples 9, 10 and 12 and Comparative Example 4)

The formed body obtained by the press forming was hot-pressed at 1,000 °C for 4 hours under an Ar atmosphere and at the pressure of 210 kg/cm². Then the temperature was set at 1,600 °C, and it was hot-pressed for 4 hours to obtain a sintered body (sample).

### (Example 11)

The formed body obtained by the press forming was hot-pressed at 1,000 °C for 4 hours under an Ar atmosphere and at the pressure of 210 kg/cm². Then the temperature was set at 1,675 °C, and it was hot-pressed for 4 hours to obtain a sintered body (sample).

### (Comparative Example 5)

Comparative Example 5 was Ni alloy of a center electrode for spark plug being commercially available.

### <Crystal phase>

The X-ray diffraction patterns of the thus obtained sintered bodies (samples) were measured by a θ-2θ method. The X-ray diffraction was measured by using an X-ray diffractometer (manufactured by Rigaku Corporation) with X-ray source of Cu-Kα. The amount (mass%) of each crystal phase was calculated from the intensity ratio of the main peak attributed to Ti₃SiC₂ and the peaks attributed to each crystal phase other than Ti₃SiC₂ in the X-ray diffraction pattern.

### <Open porosity>

The open porosity was calculated by measuring the sintered bodies (samples) with the Archimedes method.

### <Bending strength>

The bending strength of the sintered bodies (samples) was measured by performing a four-point bending test (JIS R1601).

### <Thermal conductivity>

The thermal conductivity of the sintered bodies (samples) was calculated from the specific heat measured by differential scanning calorimetry (DSC), the thermal diffusion coefficient measured by a laser flash method, and the density measured by the Archimedes method (JIS R1611).

### <Volume resistivity>

The sintered bodies (samples) were measured by a four-terminal method (JIS R1650-2).

### <Thickness of oxide film formed>

About 0.5 to 1.5 g (surface area: 1.6 to 3.2 cm²) of the sintered bodies (samples) was placed in a rectangular alumina box, it was held at 1,000°C for 5 hours under atmospheric pressure, and then the thickness of an oxide film formed was observed and measured using a SEM.

### <Arc wear start current value and arc wear rate>

The processed sintered bodies (samples) being 0.6 mm in diameter and 15 to 20 mm in length were used as an anode, and SUS 304 was used as a cathode. Specifically, the processed sintered body was opposed at the angle of 45° relative to the cathode made of SUS 304 to form the anode, and the distance between the cathode and the anode was set at 5 mm. Arc discharge was then generated at ordinary temperature under atmospheric pressure with a 100 kV power supply. The discharge was generated for 5 minutes at the current value of the power supply of 0.15 A, and the arc discharge area was observed with an optical microscope to confirm the presence or not of wear. When no wear due to the arc discharge was observed, further arc discharge was generated for 5 minutes while increasing the primary-side current value by 0.05 A, and then an optical microscope observation was performed. This cycle (arc discharge to optical microscope observation) was repeated until wear began. As the primary-side current was changed, the current value at which wear began was taken as the arc wear start current value. Arc discharge was also generated for 5 minutes while setting the current value of the power supply at 0.45 A, and a reduced diameter by wearing from original shape was taken as the amount of wear to calculate the arc wear rate by dividing it by the discharge time.

### <Evaluation of arc resistance>

Samples having the arc wear rate of 20 µm/min or less was evaluated as "Excellent", samples having the arc wear rate of 21 to 30 µm/min was evaluated as "Good", and samples having the arc wear rate of 31 µm/min or more was evaluated as "Inferior", and they are shown in the following table.

**[Table 1]**

| | Raw material mixing ratio (mass%) | | | | Element ratio (mass%) | | | | Amount of Si substituted with Al (mol%) | Mixing method | Firing | | | |
|---|---|---|---|---|---|---|---|---|---|---|---|---|---|---|
| | Ti | SiC | Al | C | Ti | Si | Al | C | | | First firing | | Second firing | |
| | | | | | | | | | | | Temp. (°C) | Holding time (h) | Temp. (°C) | Holding time (h) |
| Ex. 1 | 73.1 | 21.0 | 0.0 | 6.0 | 73.1 | 14.7 | 0.0 | 12.2 | 0 | Mortar | - | - | 1600 | 4 |
| Ex. 2 | 71.3 | 22.8 | 0.0 | 5.9 | 71.3 | 16.0 | 0.0 | 12.7 | 0 | Pot | - | - | 1600 | 4 |
| Ex. 3 | 73.1 | 21.6 | 0.0 | 5.3 | 73.1 | 15.1 | 0.0 | 11.8 | 0 | Mortar | - | - | 1600 | 4 |
| Ex. 4 | 70.3 | 24.0 | 0.0 | 5.7 | 70.3 | 16.8 | 0.0 | 12.9 | 0 | Mortar | - | - | 1600 | 4 |
| Ex. 5 | 69.7 | 24.9 | 0.0 | 5.3 | 69.7 | 17.5 | 0.0 | 12.8 | 0 | Mortar | - | - | 1600 | 4 |
| Ex. 6 | 73.1 | 22.3 | 0.0 | 4.5 | 73.1 | 15.6 | 0.0 | 11.2 | 0 | Mortar | - | - | 1600 | 4 |
| Ex. 7 | 68.3 | 26.1 | 0.0 | 5.5 | 68.3 | 18.3 | 0.0 | 13.4 | 0 | Mortar | - | - | 1600 | 4 |
| Ex. 8 | 72.8 | 21.3 | 0.0 | 5.9 | 72.8 | 15.0 | 0.0 | 12.3 | 0 | Mortar | - | - | 1600 | 4 |
| Ex. 9 | 73.1 | 20.0 | 0.7 | 6.2 | 73.1 | 14.0 | 0.7 | 12.2 | 5 | Mortar | 1000 | 4 | 1600 | 4 |
| Ex. 10 | 73.1 | 18.9 | 1.4 | 6.6 | 73.1 | 13.2 | 1.4 | 12.2 | 10 | Mortar | 1000 | 4 | 1600 | 4 |
| Ex. 11 | 73.0 | 14.7 | 4.5 | 7.8 | 73.0 | 10.3 | 4.5 | 12.2 | 30 | Mortar | 1000 | 4 | 1675 | 4 |
| Ex. 12 | 73.1 | 13.7 | 5.0 | 8.1 | 73.1 | 9.6 | 5.0 | 12.2 | 35 | Mortar | 1000 | 4 | 1600 | 4 |
| Comp. Ex. 1 | 73.5 | 19.7 | 0.0 | 6.8 | 73.5 | 13.8 | 0.0 | 12.7 | 0 | Mortar | - | - | 1600 | 4 |
| Comp. Ex.2 | 67.6 | 26.3 | 0.0 | 6.1 | 67.6 | 18.4 | 0.0 | 14.0 | 0 | Mortar | - | - | 1600 | 4 |
| Comp. Ex. 3 | 66.7 | 27.8 | 0.0 | 5.5 | 66.7 | 19.5 | 0.0 | 13.8 | 0 | Mortar | - | - | 1600 | 4 |
| Comp. Ex. 4 | 73.6 | 0.0 | 13.8 | 12.6 | 73.6 | 0.0 | 13.8 | 12.6 | 100 | Mortar | 1000 | 4 | 1600 | 4 |
| Comp. Ex.5 (Ni alloy) | - | - | - | - | - | - | - | - | - | | | | | |

**[Table 2]**

| | Amount of crystal phase (mass%) | | | | | Material properties | | | | | Arc resistance | | | | Bonding state to insulator |
|---|---|---|---|---|---|---|---|---|---|---|---|---|---|---|---|
| | | | | | | | | | | | Oxidation resistance | Arc wear start current value | Arc wear rate | Evaluation | |
| | Ti₃(Si,Al)C₂ | TiC | Ti₅Si₃ | SiC | TiSi₂ | Open porosity | Strength | Thermal conductivity | Resistivity | Coefficient of thermal expansion | Thickness of oxide film | | | | |
| | % | % | % | % | % | % | MPa | W/mK | 10⁻⁵Ωcm | ppm/K | µm | A | µm/min | | |
| Ex. 1 | 99.8 | 0.2 | 0 | 0 | 0 | 0.00 | 274 | 47 | 2.6 | 8.7 | 5 | 0.35 | 14 | Excellent | Good |
| Ex. 2 | 99.7 | 0.3 | 0 | 0 | 0 | 0.30 | 274 | 47 | 2.4 | 8.6 | | 0.35 | 15 | Excellent | Good |
| Ex. 3 | 95.9 | 0.3 | 3.8 | 0 | 0 | 0.03 | 312 | 46 | 2.8 | | 6 | 0.35 | 16 | Excellent | |
| Ex. 4 | 96.0 | 0.2 | 0 | 3.8 | 0 | 0.00 | 290 | 47 | | | 5 | 0.35 | 16 | Excellent | |
| Ex.5 | 93.2 | 0.3 | 2 | 4.5 | 0 | 0.04 | 312 | | 2.8 | | | 0.35 | 18 | Excellent | |
| Ex. 6 | 91.3 | 0.4 | 8.3 | 0 | 0 | 0.04 | 349 | 45 | 2.6 | | 8 | 0.30 | 25 | Good | |
| Ex. 7 | 93.1 | 0.5 | 0 | 6.4 | 0 | 0.03 | | | 2.6 | | | 0.30 | 24 | Good | |
| Ex. 8 | 96.4 | 0 | 0 | 0.4 | 3.2 | 0.27 | | | | | | 0.25 | 28 | Good | |
| Ex. 9 | 95.2 | 0.3 | 4.5 | 0 | 0 | 0.04 | 353 | 25 | 2.4 | | 22 | 0.35 | 14 | Excellent | |
| Ex. 10 | 93.9 | 0.4 | 5.7 | 0 | 0 | 0.02 | 347 | 40 | 2.8 | | 30 | 0.35 | 12 | Excellent | Good |
| Ex. 11 | 91.9 | 0.5 | 7.6 | 0 | 0 | 0.00 | 378 | 34 | 3.8 | | 33 | 0.35 | 18 | Excellent | |
| Ex. 12 | 92.8 | 0.4 | 6.8 | 0 | 0 | 0.00 | 360 | 48 | | | 40 | 0.30 | 30 | Good | |

| Oxidation resistance | Arc Wear Start Current value | Arc wear rate | Evaluation | | | | | | | | | | | | |
|---|---|---|---|---|---|---|---|---|---|---|---|---|---|---|---|
| Ti₃(Si,Al)C₂ | | | | TiC | Ti₅Si₃ | SiC | TiSi₂ | Open porosity | Strength | Thermal conductivity | Resistivity | Coefficient of thermal expansion | Thickness of oxide film | | |
| % | % | % | % | % | % | MPa | W/mK | 10⁻⁵Ωcm | ppm/K | µm | A | µm/min | | | |
| Comp. Ex. 1 | 96.0 | 4 | 0 | 0 | 0 | 0.6 | | 47 | 2.4 | | 7 | 0.25 | 39 | Inferior | |
| Comp. Ex. 2 | 87.2 | 5 | 0 | 7.8 | 0 | 0.8 | | 48 | | | | 0.25 | 38 | Inferior | |
| Comp. Ex. 3 | 90.0 | 1.3 | 0 | 8.7 | 0 | 0.1 | | | | | | 0.25 | 35 | Inferior | |
| Comp. Ex. 4 | 95.6 | 4.4 | 0 | 0 | 0 | 0.02 | 300 | 38 | 3.8 | | 125 | 0.25 | 48 | Inferior | |
| Comp. Ex. 5 (Ni alloy) | - | - | - | - | - | - | - | - | - | About 13 | - | 0.25 | 50 | Inferior | Inferior |

Firstly the arc wear rates are compared. Examples 1 to 12 having the TiC content of 0.5 mass% or less and the open porosity of 0.5 % had a low arc wear rate and good for arc resistance as compared with Comparative Examples 1 to 4. When the wear state was compared Example 1 with Comparative Example 1 by a SEM, there had been observed that a part of TiC was oxidized and scattered in Comparative Example 1 having the higher TiC content, whereas scattering areas were hardly observed in Example 1 having the TiC content of 0.5 mass% or less.

As compared with Examples 1 to 5, 9 to 11 and Example 12, Example 1 to 5, 9 to 11 in which the amount of Si in Ti₃SiC₂ substituted with Al was 30 mol% or less had a low arc wear rate and more favorable arc resistance.

As compared with Examples 1 to 5 and Example 6, Examples 1 to 5 in which the Ti₅Si₃ content was 8 mass% or less had a low arc wear rate and more favorable arc resistance. As compared with Examples 1 to 5 and Example 7, Examples 1 to 5 in which the SiC content was 5 mass% or less had a low arc wear rate and more favorable arc resistance. As compared with Examples 1 to 5 and Example 8, Examples 1 to 5 in which the TiSi₂ content was 3 mass% or less had a low arc wear rate and more favorable arc resistance.

Next, the arc wear start current values are compared. As compared with Examples 1 to 5, 9 to 11 and Example 12, Examples 1 to 5, 9 to 11 in which the amount of Si in Ti₃SiC₂ substituted with Al was 30 mol% or less had a high arc wear start current value and favorable arc resistance. As compared with Examples 1 to 5 and Example 6, Examples 1 to 5 in which the Ti₅Si₃ content was 8 mass% or less had a high arc wear start current value and favorable arc resistance. As compared with Examples 1 to 5 and Example 7, Examples 1 to 5 in which the SiC content was 5 mass% or less had a high arc wear start current value and favorable arc resistance. As compared with Example 1 to 5 and Example 8, Example 1 to 5 in which the TiSi₂ content was 3 mass% or less had a high arc wear start current value and favorable arc resistance.

Examples 1 to 12 having favorable arc resistance had a thermal conductivity of 25 W/mK or more. Moreover, Examples 1 to 12 having favorable arc resistance had a bending strength of 200 MPa or more. Furthermore, Example 1 to 12 having favorable arc resistance had a coefficient of thermal expansion of about 7 to 9 ppm/K. Example 1 to 12 having favorable arc resistance had a volume resistivity of 1×10⁻⁴ Ω · cm or less.

Examples 1, 3 to 4, 6, and 9 to 11, when being held at 1,000 °C for 5 hours under atmospheric pressure, hardly showed peeling an oxide film off from the base material, whereas Example 12 had a thick film and so had lowered oxidation resistance. In addition, when the Al content is 30 mol% or less, an arc wear rate being greatly influenced by thermal load was also low and so favorable arc resistance.

### <Bonding to insulator>

A main component (alumina) of the insulators and the dense Ti₃SiC₂ body were co-fired to examine whether they can be bonded to each other or not. The main component (alumina) of the insulators and Ni alloy were also co-fired. When the one can be bonded, it was evaluated as "Good", and when the one can not be bonded, it was evaluated as "Inferior" in Table 2.

As shown in Table 2, as compared with Example 1 and Comparative Example 5, Example 1 having a coefficient of thermal expansion relatively close to about 8 ppm/K of the insulator was successfully co-fired with the insulator to be bonded. As to Examples 2 and 10, they also were successfully co-fired to be bonded. On the other hand, Comparative Example 5 failed in bonding. It is thus expected that Example 1, 2, and 10 capable of bonding by co-firing with the insulator can simplify the manufacturing process of a spark plug, thus reducing cost.

As described above, the Ti₃SiC₂ based material of the present invention reduced heterophase TiC and the open porosity to improve arc resistance. This can provide an electrode material for spark plug having a long lifetime and significantly improved arc resistance at low cost.

### Industrial Applicability

The Ti₃SiC₂ based material of the present invention is useful as an electrode material, particularly as an electrode material for spark plug. An electrode and a spark plug with a use of the Ti₃SiC₂ based material of the present invention are low in cost and superior in arc resistance.

### Description of Reference Numerals

1: center electrode, 2: insulator, 3: metal shell, 4: ground electrode, 10: spark plug

## Claims

1. A Ti₃SiC₂ based electrode material for a spark plug, comprising Ti₃SiC₂ as a main phase, wherein a TiC content is 0.5 mass% or less and open porosity is 0.5% or less **characterized in that** the TiSi₂ content is 3 mass% or less.

2. The Ti₃SiC₂ based electrode material for a spark plug according to claim 1, wherein 0 to 30 mol% of Si in the main phase Ti₃SiC₂ is substituted with Al.

3. The Ti₃SiC₂ based electrode material for a spark plug according to claim 1 or 2, wherein a Ti₅Si₃ content is 8 mass% or less.

4. The Ti₃SiC₂ based electrode material for a spark plug according to any one of claims 1 to 3, wherein a SiC content is 5 mass% or less.

5. The Ti₃SiC₂ based electrode material for a spark plug according to any one of claims 1 to 4, wherein a thermal conductivity is 25 W/mK or more.

6. The Ti₃SiC₂ based electrode material for a spark plug according to any one of claims 1 to 5, wherein a bending strength is 200 MPa or more.

7. The Ti₃SiC₂ based electrode material for a spark plug according to any one of claims 1 to 6, wherein a coefficient of thermal expansion is 7 to 9 ppm/K.

8. The Ti₃SiC₂ based electrode material for a spark plug according to any one of claims 1 to 7, wherein a volume resistivity is 1×10⁻⁴ Ω·cm or less.

9. The Ti₃SiC₂ based electrode material for a spark plug according to any one of claims 1 to 8, wherein an oxide film formed when being held at 1, 000°C for 5 hours under atmospheric pressure has a thickness of 40 µm or less.

10. An electrode (1, 4) with a use of the Ti₃SiC₂ based electrode material for a spark plug according to any one of claims 1 to 9.

11. A spark plug (10) formed by using the electrode (1, 4) according to claim 10.

12. A method for manufacturing the Ti₃SiC₂ based electrode material for a spark plug according to claim 1, comprising the steps of:
mixing raw materials in a mass ratio of a titanium source of 68.0 to 73.5 mass%, a silicon source of 14.0 to 19.0 mass%, and a carbon source of 11.0 to 14.0 mass%;
subjecting thus obtained raw material powder mixture to forming; and
firing the resultant formed body.

13. A method for manufacturing a Ti₃SiC₂ based electrode material for a spark plug according to claim 2 comprising the steps of:
mixing raw materials in a mass ratio of a titanium source of 68.0 to 73.5 mass%, a silicon source of 9.0 to 19.0 mass%, an aluminum source of 0 to 5.0 mass%, and a carbon source of 11.0 to 14.0 mass%;
subjecting thus obtained raw material powder mixture to forming; and
firing the resultant formed body.

14. A method for manufacturing a spark plug (10) comprising the step of:
embedding the electrode (1) according to claim 10 in an insulator formed body, followed by firing to make the insulator formed body an insulator (2) and concurrently to bond the insulator (2) and the electrode (1).

## Patentansprüche

1. Ti₃SiC₂-basiertes Elektrodenmaterial für eine Zündkerze, das Ti₃SiC₂ als Hauptphase umfasst, wobei der TiC-Gehalt 0,5 Masse-% oder weniger und die offene Porosität 0,5 % oder weniger beträgt, **dadurch gekennzeichnet, dass** der TiSi₂-Gehalt 3 Masse-% oder weniger beträgt.

2. Ti₃SiC₂-basiertes Elektrodenmaterial für eine Zündkerze nach Anspruch 1, wobei 0 bis 30 Mol-% von Si in der Hauptphase Ti₃SiC₂ mit Al substituiert ist.

3. Ti₃SiC₂-basiertes Elektrodenmaterial für eine Zündkerze nach Anspruch 1 oder 2, wobei der Ti₅Si₃-Gehalt 8 Masse-% oder weniger beträgt.

4. Ti₃SiC₂-basiertes Elektrodenmaterial für eine Zündkerze nach einem der Ansprüche 1 bis 3, wobei der SiC-Gehalt 5 Masse-% oder weniger beträgt.

5. Ti₃SiC₂-basiertes Elektrodenmaterial für eine Zündkerze nach einem der Ansprüche 1 bis 4, wobei die Wärmeleitfähigkeit 25 W/mK oder mehr beträgt.

6. Ti₃SiC₂-basiertes Elektrodenmaterial für eine Zündkerze nach einem der Ansprüche 1 bis 5, wobei die Biegungsfestigkeit 200 MPa oder mehr beträgt.

7. Ti₃SiC₂-basiertes Elektrodenmaterial für eine Zündkerze nach einem der Ansprüche 1 bis 6, wobei der Wärmeausdehnungskoeffizient 7 bis 9 ppm/K beträgt.

8. Ti₃SiC₂-basiertes Elektrodenmaterial für eine Zündkerze nach einem der Ansprüche 1 bis 7, wobei der spezifische Volumenwiderstand 1 x 10⁻⁴ Ω•cm oder weniger beträgt.

9. Ti₃SiC₂-basiertes Elektrodenmaterial für eine Zündkerze nach einem der Ansprüche 1 bis 8, wobei ein Oxidfilm, der sich bei einer 5-stündigen Aussetzung gegenüber 1000 °C unter atmosphärischem Druck bildet, eine Dicke von 40 µm oder weniger aufweist.

10. Elektrode (1, 4) mit einer Verwendung des Ti₃SiC₂-basierten Elektrodenmaterials für eine Zündkerze nach einem der Ansprüche 1 bis 9.

11. Zündkerze (10), die durch Verwendung der Elektrode (1, 4) nach Anspruch 10 gebildet wird.

12. Verfahren zur Herstellung des Ti₃SiC₂-basierten Elektrodenmaterials für eine Zündkerze nach Anspruch 1, das folgende Schritte umfasst:
das Mischen der Rohmaterialien in einem Massenverhältnis einer Titanquelle von 68,0 bis 73,5 Masse-%, einer Siliciumquelle von 14,0 bis 19,0 Masse-% und einer Kohlenstoffquelle von 11,0 bis 14,0 Masse-%;
das Unterziehen des so erhaltenen Rohmaterialpulvergemisches einer Formbehandlung; und
das Brennen des erhaltenen geformten Körpers.

13. Verfahren zur Herstellung eines Ti₃SiC₂-basierten Elektrodenmaterials für eine Zündkerze nach Anspruch 2, das folgende Schritte umfasst:
das Mischen der Rohmaterialien in einem Massenverhältnis einer Titanquelle von 68,0 bis 73,5 Masse-%, einer Siliciumquelle von 9,0 bis 19,0 Masse-%, einer Aluminiumquelle von 0 bis 5,0 Masse-% und einer Kohlenstoffquelle von 11,0 bis 14,0 Masse-%;
das Unterziehen des so erhaltenen Rohmaterialpulvergemisches einer Formbehandlung; und
das Brennen des erhaltenen geformten Körpers.

14. Verfahren zur Herstellung einer Zündkerze (10), das folgenden Schritt umfasst:
das Einbetten der Elektrode (1) nach Anspruch 10 in einen Isolatorformkörper und das nachfolgende Brennen, um aus dem Isolatorformkörper einen Isolator (2) herzustellen und gleichzeitig den Isolator (2) mit der Elektrode (1) zu verbinden.

## Revendications

1. Matériau d'électrode à base de Ti₃SiC₂ pour une bougie d'allumage, comprenant du Ti₃SiC₂ comme phase principale, dans lequel une teneur en TiC est de 0,5 % en masse ou moins et une porosité ouverte est de 0,5 % ou moins,
**caractérisé en ce que** la teneur en TiSi₂ est de 3 % en masse ou moins.

2. Matériau d'électrode à base de Ti₃SiC₂ pour une bougie d'allumage selon la revendication 1, dans lequel 0 à 30 % molaire de Si dans le Ti₃SiC₂ de phase principale est substitué par de l'Al.

3. Matériau d'électrode à base de Ti₃SiC₂ pour une bougie d'allumage selon la revendication 1 ou 2, dans lequel une teneur en Ti₅Si₃ est de 8 % en masse ou moins.

4. Matériau d'électrode à base de Ti₃SiC₂ pour une bougie d'allumage selon l'une quelconque des revendications 1 à 3, dans lequel une teneur en SiC est de 5 % en masse ou moins.

5. Matériau d'électrode à base de Ti₃SiC₂ pour une bougie d'allumage selon l'une quelconque des revendications 1 à 4, dans lequel une conductivité thermique est de 25 W/mK ou plus.

6. Matériau d'électrode à base de Ti₃SiC₂ pour une bougie d'allumage selon l'une quelconque des revendications 1 à 5, dans lequel une résistance à la flexion est de 200 MPa ou plus.

7. Matériau d'électrode à base de Ti₃SiC₂ pour une bougie d'allumage selon l'une quelconque des revendications 1 à 6, dans lequel un coefficient de dilatation thermique est de 7 à 9 ppm/K.

8. Matériau d'électrode à base de Ti₃SiC₂ pour une bougie d'allumage selon l'une quelconque des revendications 1 à 7, dans lequel une résistivité en volume est de 1×10⁻⁴ Ω·cm ou moins.

9. Matériau d'électrode à base de Ti₃SiC₂ pour une bougie d'allumage selon l'une quelconque des revendications 1 à 8, dans lequel un film d'oxyde formé lorsqu'il est maintenu à 1000 °C pendant 5 heures sous pression atmosphérique a une épaisseur de 40 µm ou moins.

10. Electrode (1, 4) avec une utilisation du matériau d'électrode à base de Ti₃SiC₂ pour une bougie d'allumage selon l'une quelconque des revendications 1 à 9.

11. Bougie d'allumage (10) formée au moyen de l'électrode (1, 4) selon la revendication 10.

12. Procédé de fabrication du matériau d'électrode à base de Ti₃SiC₂ pour une bougie d'allumage selon la revendication 1, comprenant les étapes suivantes :
mélange de matières premières dans un rapport en masse d'une source de titane de 68,0 à 73,5 % en masse, d'une source de silicium de 14,0 à 19,0 % en masse et d'une source de carbone de 11,0 à 14,0 % en masse ;
soumission du mélange pulvérulent de matières premières ainsi obtenu à une mise en forme ; et
cuisson dudit corps formé résultant.

13. Procédé de fabrication d'un matériau d'électrode à base de Ti₃SiC₂ pour une bougie d'allumage selon la revendication 2, comprenant les étapes suivantes :
mélange de matières premières dans un rapport en masse d'une source de titane de 68,0 à 73,5 % en masse, d'une source de silicium de 9,0 à 19,0 % en mase, d'une source d'aluminium de 0 à 5,0 % en masse et d'une source de carbone de 11,0 à 14,0 % en masse ;
soumission du mélange pulvérulent de matières premières ainsi obtenu à une mise en forme ; et
cuisson du corps formé résultant.

14. Procédé de fabrication d'une bougie d'allumage (10) comprenant les étapes suivantes :
incorporation de l'électrode (1) selon la revendication 10 dans un corps formé isolant, suivie par une cuisson pour faire du corps formé isolant un isolant (2) et pour lier simultanément l'isolant (2) et l'électrode (1).
